# EUROPEAN PATENT APPLICATION

(11) **EP 3 978 573 A1**
(43) Date of publication of application: **06.04.2022**
(21) Application number: 20382862.9
(22) Date of filing: 30.09.2020
(51) Int. Cl.: C09C 1/00

(54) **V-SHAPED (NON PLANAR) MAGNETIC EFFECT PIGMENTS**

(71) Applicant: Ruiz Quevedo, Andres, 28027 Madrid (ES)
(72) Inventor: Ruiz Quevedo, Andres, 28027 Madrid (ES)
(74) Representative: Hernández Hernández, Carlos

(57) **Abstract**

Effect pigment comprising a plurality of layers (26, 27, 28, 30, 31, 32) and a magnetic element (29), having a nonplanar configuration with at least two segments (3, 4, 9, 10, 24, 25) which joint at an angle, one side of the at least two segments (3, 4, 9, 10, 24, 25) possessing the same optical properties to an opposing side of another of the at least two segments (3, 4, 9, 10, 24, 25), and at least two of the plurality of layers (26, 27, 28, 30, 31, 32) having an asymmetrical configuration, wherein the pigment produces more than one optical effect, regardless of the face on which the pigment falls on the substrate. The different optical effects are perceived according as the pigment is looked at from the left or from the right or if a document printed with an ink comprising the effect pigments is rotated along its perpendicular axis.

## Description

### Technical Field

The invention pertains to the field of effect pigments used for different purposes including security printing, particularly to alignable effect pigments comprising a plurality of layers and a magnetic element, the pigment having a non-planar configuration that provides at least two different optical effects.

### Background Art

A conventional effect pigment, also called "Optically Variable Pigment" (OVP) is a particle presenting the following basic features: a) It has an elongated plate or platelet shape and therefore it has two faces, b) its structure is made up of a number of layers and c) it renders a single optical effect. Optical effect means that the pigment changes its appearance under certain circumstances. This change is typically a colour-changing effect, where the pigment changes colour when the angle of incidence of light varies. Other optical effects are holographic effects, whereby the pigments, usually arranged in patches or stripes, show three-dimensional imagery; and luminescent effects, whereby the pigment emits fluorescent light when receiving UV or infrared light. Optical effects can be achieved by different conventional means, such as a Fabry-Perot interferometer structure, a diffractive grating, interference-coated particles, thermochromic pigments, photochromic pigments, luminescent pigments, infrared-absorbing pigments or ultraviolet-absorbing pigments.

Effect pigments have many industrial applications, especially in the cosmetic, coating and security printing domains. Pigments can be dispersed in a liquid medium, such as a carrier or varnish, typically composed of monomers or polymers and photo-iniciators. US005171363A "Optically variable printing ink" (Roger Philips), 15/12/1992, describes how to achieve printable inks with color changing effect. When exposed to UV light or other stimuli, said components reticulate, conforming a transparent solid matrix that holds the pigment in a fixed position on the substrate.

Security printing is concerned with the printing of items such as banknotes, cheques, passports, identity cards and other valuable documents. A variety of anti-counterfeiting techniques are used in this field, one of them being colour-changing inks, also called Optically Variable Inks (OVI). A document, or more commonly, a part of a document, printed with this ink will appear to have one or other colour depending on the angle the document is viewed from, i.e. depending of the angle of incidence of light to the surface of the document. When the document is tilted, the angle of incidence of light changes and accordingly the colour will change, for instance from green to blue. This angle-dependent colour appearance cannot be reproduced by colour copying equipment, thus making it a very effective and widely used printing technique, especially in screen-printing or intaglio printing. The different colour appearance effect is attained by using a printing ink made up of a carrier with effect pigments dispersed in it.

Concerning the configuration of effect pigments, US 3087828 A (HOWARD R. LINTON), 28/06/1961, "Nacreous pigment composition", teaches a basic structure, consisting of a micaceous substrate, which is the reflective core of the pigment, and a translucent layer. More common nowadays are pigments with a "dielectric / metal / dielectric" layer structure, although there are more complex structures. The optical variability of these pigments is due to an interference effect, whereby the light falling upon a pigment is partially reflected and partially transmitted and partially diffracted. The partially transmitted or diffracted portion reaches the reflector layer of the pigment and is reflected back, interfering constructively or destructively with the other portion depending on factors such as the wavelength of the incident light, the thickness of the layers, their refractive index and the incidence angle.

As has been said, effect pigments have not only been used in the domain of security printing, but also in the manufacturing of commercial coating compositions based on coated aluminium flakes (for instance, automotive paints) or in cosmetic preparations such as nail varnish. Although of a lesser quality in terms of brightness and colour shifting, the cheap availability of these coatings has weakened the security potential of effect pigments, since a document may be reproduced by a high-quality colour printer or scanner and its optically variable portion can be added using a commercially available effect pigment. This makes it necessary to reinforce the security afforded by optically variable inks made with effect pigments, in particular to provide effect pigments with additional optical properties.

The optical effects of security inks highly depend on the degree of alignment of the effect pigments in the substrate. This requires, first, that the maximum of pigments lay substantially flat on the substrate and, second, that the pigments follow a regular pattern of alignment in the substrate.

To improve the regular deposition and alignment of the pigments, magnetic effect pigments, that is to say, effect pigments one of whose layers has magnetic properties (i.e. either the layer is magnetic or magnetisable) have been developed. The magnetic layer functions, in addition, as a covert security feature, since magnetism can be detected by a sensor in order to authenticate the document. WO 02/073250 A (SICPA HOLDING S.A.) 19/09/2002 [0017], [0023], Fig. 2, discloses a magnetic pigment with a symmetric seven-layer structure "absorber / dielectric / reflector / magnetic / reflector / dielectric / absorber".

The magnetic properties of effect pigments make it possible to control, to a certain extent, the spatial orientation of the pigments during the printing or drying process. This is important because, as mentioned above, the orientation of the pigments on the substrate will determine the effectivity of their optical effect. Typically, this is performed by submitting the magnetic pigments to an external magnetic field generated by a set of magnets or electromagnets located by the printing or drying machines. Given that the magnetic pigments are dispersed in a liquid medium, they are free to rotate and therefore will react to such external magnetic field, aligning themselves in respect of the magnetic field. Thus, effect pigments comprising a magnetic element are alignable. When the liquid medium reticulates during the printing or drying process, the pigments will be fixed to the substrate, and cannot be influenced any longer by any external magnetic field, as described, for instance, at US7258900B2 (Raksha) "Magnetic planarization of pigment flakes", 15/07/2002.

The alignment of the magnetisation of an effect magnetic pigment with respect to the magnetic field generated by the printing machine, which takes place when the magnetic pigment is dispersed in a liquid medium, will always be parallel to such magnetic field. A related question is how the pigment will orientate itself in space with respect to an external magnetic field. That question depends on another factor, namely the magnetisation of the magnetic or magnetisable element of the pigment. It is known that a thin magnetic or magnetisable layer forming part of an elongated particle, such as magnetic effect pigments, generally presents a parallel magnetisation, also called in-plane magnetisation. Under the effect of said in-plane magnetisation, magnetic pigments incorporating such magnetic or magnetisable layer will spatially orientate themselves with respect to an external magnetic field in a position that will be parallel to such magnetic field.

The above implies that the orientation of the pigments on the printing substrate, to a certain extent, can be controlled using magnetic fields generated by magnets or electro-magnets arranged in the printing machine and whilst the pigments are dispersed in a liquid medium, because the pigments will necessarily orientate themselves spatially in parallel to said magnetic fields. Therefore, by changing the direction of the magnetic fields as desired, the spatial orientation of the pigments will change.

However, another aspect of the position that above-described effect pigments will adopt on the printed substrate cannot be controlled by way of magnetic fields, namely, which face of the pigment will fall "face down" on the substrate and which one "face up". The mentioned parallel magnetisation of pigments with respect to the plane does not have an influence on this aspect. A magnetic pigment in a liquid medium, due to its parallel magnetisation, will be restrained in a parallel position with respect to the magnetic field, but will rotate freely around the magnetic field direction. As the magnetisation of the pigments is in-plane, i.e. parallel to the plane of the pigment, this free rotation around the magnetic field direction implies a "face up - face down" motion, as a result of which the pigment is liable to fall on the substrate on either face at random. This means that the face which will be visible on the substrate cannot be predetermined, and therefore magnetic pigments must be designed with a symmetrical layer structure, to ensure that, whatever face will lie face up on the substrate, the optical effect will be the same, because the two faces are identical. For instance, the pigment disclosed at above-mentioned document WO 02/073250A has a symmetrical structure "in order to provide for equal properties on both sides" paragraph [0017].

Against this background, the present invention provides an effect pigment comprising a magnetic element, with a specific shape and an asymmetrical layer configuration that produces at least two optical effects, thus adding a further security feature to the articles, in particular security documents, coated with a coating composition, in particular a printing ink, comprising such pigments.

### Summary of invention

The subject matter of the present invention is an effect pigment comprising a plurality of layers (26, 27, 28, 30, 31, 32) and a magnetic element (29). Due to its configuration, the pigment cannot be confined within a single plane. Specifically, the effect pigment can be confined at least within two planes and thus its configuration is nonplanar.

Such nonplanar configuration means that the pigment, as opposed to conventional pigments, has more than two effective sides and accordingly produces more than one optical effect. These effects are produced regardless of the face on which the pigment falls on the substrate. The different optical effects are perceived according as the pigment is looked at from the left or from the right. Or, in other words, the different optical effects will be perceived by an observer when an article, in particular a document printed with an ink comprising the effect pigments according to the invention, is rotated along its perpendicular axis. Features and functionality of this pigment will be described hereinafter with reference, by way of example, to existing pigments.

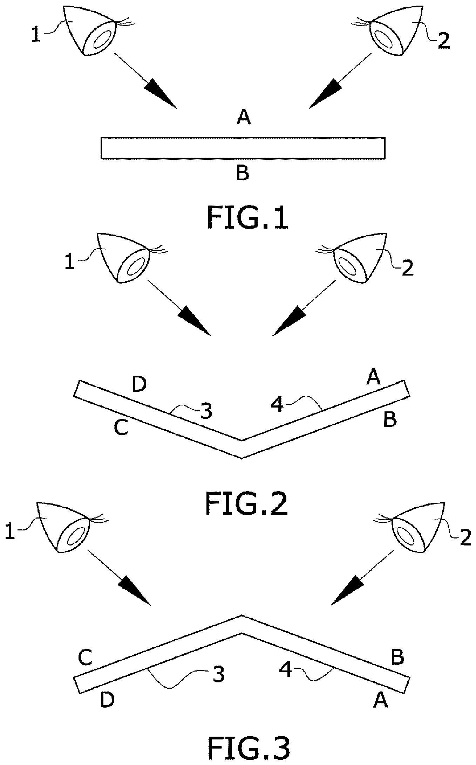

FIG.1 represents a state of the art pigment, with two sides A and B (this will be the terminology used hereinafter: "upside face" and "downside face" are not accurate terms, since the pigment can rotate, inverting the relative position of the faces). For easy of reference, the layer structure of the pigment is not represented. In optical terms, side A = side B, that is, both sides have the same optical properties and therefore produce the same optical effect. This identity of optical properties is required due to the above-mentioned unpredictability of falling positions. An observer (1) is looking at the pigment from the left and another observer (2) is looking at it from the right. If we focus on one side of the pigment, either A or B, it will be indifferent that the pigment is looked at from left to right (1) or from right to left (2), because the optical effect produced by that side (identical to the effect produced by the opposite side) and perceived by the observer will be the same.

The nonplanar configuration of the pigment provided by the present invention implies that the pigment can be divided into at least two segments (3, 4, shown at Figs. 2 and 3), (9, 10, shown at Fig. 5), (24, 25, shown at Fig. 9) which join at an angle. The at least two segments (3, 4, 9, 10, 24, 25) have an elongated shape.

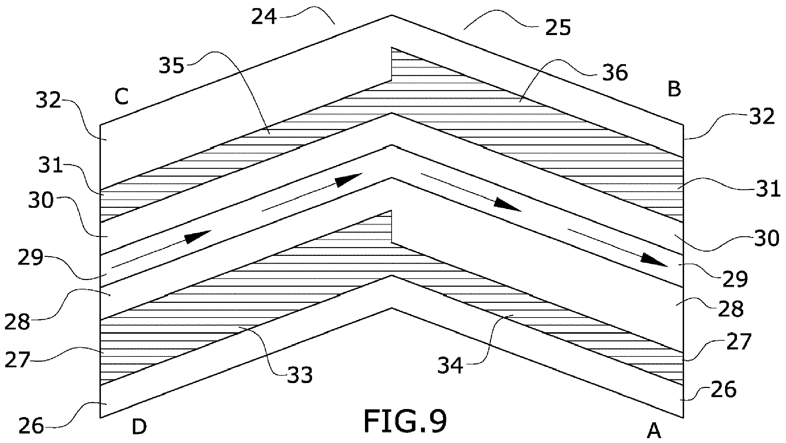

FIG. 2 represents a pigment according to an embodiment of the present invention. For better reference, its constituent layers are not represented and it is assumed that the pigment is not magnetized. The pigment has a nonplanar configuration with a first segment (3) and a second segment (4) which joint at an angle forming a V. Thus, the pigment is V-shaped. In this patent, it will be considered that a pigment or a substrate are V-shaped even where the V is represented in an inverted position. First segment (3) has two sides D and C. Second segment (4) has two sides A and B. Owing to this, in the position represented in Fig. 2, when the pigment is looked at from the left (1), side A is seen, and when looked from the right, side D is seen. Due to the configuration of the plurality of its constituent layers (26, 27, 28, 30, 31, 32, shown at Fig. 9), side A and side D have different optical properties. Consequently, side A and side D produce a different optical effect: one optical effect (produced by side A) will be perceived when the pigment is looked at from the left (1) and a different optical effect (produced by side D), will be perceived when looked at from the right (2). Translated to a document with a security feature printed with an ink containing these pigments, this means that a person holding such document that looks at the security feature from one perspective will perceive one optical effect, for instance, a single colour, or a colour changing effect, and if he rotates the document along a perpendicular axis, he will perceive a different optical effect, for instance a different single colour or an different colour changing effect; or another sort of optical effect, like a luminescent, holographic or diffractive effect. Such dual optical effects can be combined, in that side A can produce one type of optical effect (for instance, a colour effect) and side D can produce another type of effect (for instance, a luminescent effect). Nevertheless, the particular types of optical effect produced by the pigment are irrelevant, because the patent is not concerned with any particular type of optical effect, but with the feature whereby certain sides of the same pigment produce different optical effects.

This kind of dual optical effects cannot be obtained with existing pigments. Conventional optically variable pigments (OVP) produce a single optical effect, for instance, they can show two different colours, changing from one colour to the other when tilted (as tilting varies the angle of incidence of light). However, when the corresponding printed document is rotated along its perpendicular axis, the observer will not perceive any additional change of appearance (for instance, a different colour change, or another sort of optical effect).

Now the different positions in which a claimed pigment may fall on the substrate will be taken into account. Fig 3 illustrates the same V-shaped pigment as in figure 2, but having fallen on the substrate in an inverted position, after a 180° rotation along its longitudinal axis with respect to the pigment in figure 2. When looked at from the left (1), in the position represented in Fig. 2, side C is seen and when looked from the right (2) side B is seen. Again, due to the configuration of the pigment, the two sides (C and B) that can be seen in this position of the pigment have different optical properties.

According to the invention, the optical properties of one side of the pigment, for instance side A, are the same as the optical properties of an opposing side, for instance side C. By "opposing side" is meant that the sides having the same optical properties are located in different segments (3, 4, 9, 10, 24, 25) of the pigment and that one side in one segment is on the flip side of the other side in another segment. As can be seen in Fig. 2, side C in segment (3) is on the flip side with respect to side A in segment (4), so they are in opposing sides and their optical properties are the same. Likewise, side D in segment (3) in on the flip side with respect to side B in segment 4, their optical properties being the same and different to the optical properties of the other two sides A and C.

This configuration ensures that the pigment will produce the same optical effects irrespective of its falling in the positions shown at figure 2 or at figure 3, because the two sides of the pigment that can possibly be seen from the left (1), i.e. sides A or C, possess identical optical properties; and the two sides that can possibly be seen from the right, i.e., sides D or B, possess identical optical properties. In optical terms, A=C and B=D. And as deduced from the above, in optical terms A# B, A≠D, C≠B, with the result that the same pigment can produce two different optical effects.

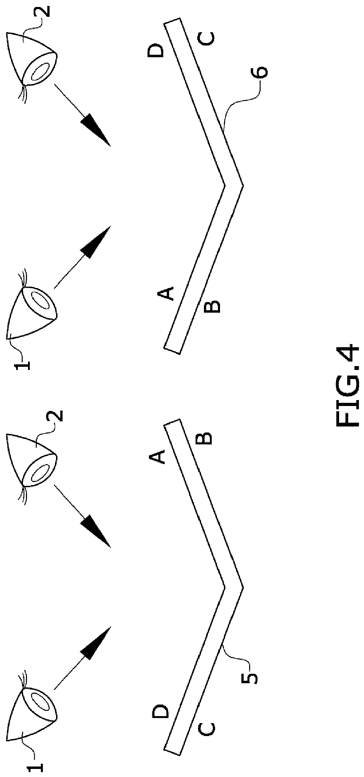

However, the two falling positions represented at figures 2 and 3 are not the only possible occurrences. Rather, and as has been said, when pigments are dispersed in a liquid medium, they can rotate freely and fall at random on the substrate, assuming their rotation is not controlled to some extent by submitting them to magnetic fields, if the pigments have previously been magnetized. Figure 4 shows a first (5) and a second (6) pigments with the nonplanar configuration as claimed. The configuration and resulting optical properties of their different sides (A, B, C, D) are the same as in the pigments exemplified at Figs. 2 and 3. Second pigment (6) has rotated 180° along its perpendicular axis, with respect to the position of first pigment (5). It must be noted that the position of the second pigment (6) is different from the pigment represented in Fig. 2, since the sides are rotated. When the two pigments (5, 6) are looked at from the left (1), side A of first pigment (5) and side D of second pigment (6) can be seen. And when looked at from the right (2), the same sides A and D will be seen: specifically, side D of first pigment (5) and side A of second pigment (6). Given that A and D are optically different, the pigments (5, 6) would not offer a homogeneous look, because different optical effects would be mixed when looking from one perspective. However, the purpose of the invention is that when looking from one perspective, all the pigments that can be seen produce the same optical effect and therefore the look of the printed area is homogeneous.

Here the magnetization of the pigments comes into play: to avoid such undesirable falling positions, the claimed pigments are magnetized in a specific way: by applying the magnetization in the same direction and sense.

Both the magnetization of the pigments and the magnetic fields to which the pigments are subjected are represented in this patent by arrows, which are a conventional way of representing vectors. The magnitude of the vector corresponds to the length of the arrow, and the direction of the vector corresponds to the angle between the arrow and a coordinate axis. The sense of the direction is indicated by the arrowhead.

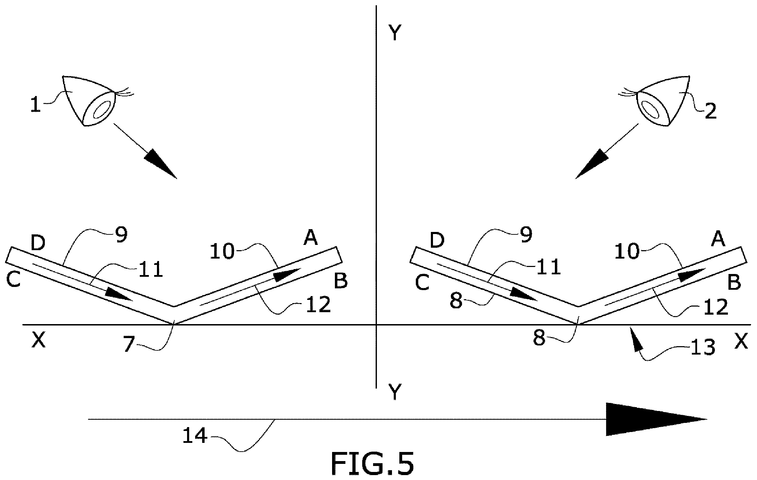

Figure 5 represents two V-shaped pigments (7, 8) having respective first segments (9) and respective second segments (10). The pigments (7, 8) have been magnetized during their manufacturing process. Said magnetization that has been applied to the pigments is represented by first arrows (11) corresponding to respective first segments (9) and by second arrows (12) corresponding to respective second segments (10). The direction of the arrows (11, 12) corresponds to the angle between them and the coordinate axis X (13). The sense of the direction is indicated by the arrowheads. The direction of the arrows (11, 12) is parallel to the plane of each segment of the pigments (7, 8), therefore each segment (7, 8) has a parallel or in-plane magnetization. The difference between these pigments and conventional ones is that the latter have a planar configuration, so they are magnetized in their single plane, whereas the former, presenting a nonplanar magnetization, are magnetized in both planes or segments (3, 4, 9, 10, 24, 25). Therefore, when referring to the claimed effect pigments, "in-plane magnetization" means that each segment (3, 4, 9, 10, 24, 25) of the pigment possess such an in-plane magnetization. And also, and most importantly for the invention, since the arrowheads are all pointing in the same sense, it means that the pigments (7, 8) have been magnetized in the same sense.

In Fig. 5, the pigments (7, 8) are submitted to an external magnetic field, such as the magnetic field generated by magnets in a security printing machine. The magnetic field vector is represented by an arrow (14). The direction of the arrow (14) is parallel to coordinate axis X (13) and the sense of the magnetic field is from left to right as indicated by the arrowhead.

In the presence of a magnetic field (14), magnetized effect pigments (7, 8) will always align themselves in parallel to the orienting magnetic field (14), as previously explained. Given that the pigments (7, 8) have been applied a parallel or in-plane magnetization, the result is that they will orientate themselves in parallel to such magnetic field (14).

It must be noted, therefore, that the arrows (11, 12) inside the pigments (7, 8) are indicating two different facts: on the one hand, they indicate the magnetization that has been applied to the pigments (7, 8) during their manufacturing process (parallel to the plane of the segments (9, 10) and in the same sense). And at the same time, the addition of said arrows represents the vectorial resultant of the magnetization indicating how the pigments (7, 8) orientate themselves under the influence of the magnetic field (14): in parallel to the magnetic field (14).

In said Fig. 5, in the falling position of pigments (7, 8), an observer (1) looking from the left would see respective sides A, and looking from the right (2) would see respective sides D. Therefore, when looking from the left (1), the pigments (7, 8) will produce one and the same optical effect and when looking from the right (2), the pigments (7, 8) will produce one and the same optical effect, these optical effects produced when looking from the left (1) or from the right (2) being different from each other, because respective sides A and respective sides D have different optical properties. Thus, in-plane magnetization of pigments in the same sense and direction ensures that rotations along a perpendicular axis such as it happened to pigment (6) at Fig. 4 will not occur.

However, the falling positions of magnetized V-shaped pigments (7, 8) represented at figure 5 are not the only possible occurrences. As has been explained, pigments which have been applied an in-plane magnetization submitted to a magnetic field rotate around the direction of the magnetic field. Accordingly, as a result of such rotation, the two pigments (7, 8), or one of them, could have fallen on the substrate in an inverted position.

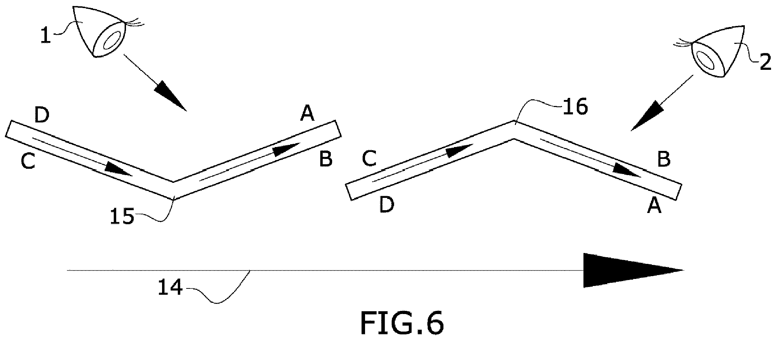

Figure 6 represents such an occurrence: a first pigment (15) has fallen in the same position as the equivalent pigment (7) in figure 5, whereas a second pigment (16) has fallen in an inverted position with respect to its equivalent pigment (8) in figure 5: an observer (1) looking from the left would see respective sides A and C, or if looking from the right (2) would see respective sides B and D. Since in optical terms A=C and B=D, this orientation of pigments is equivalent to the one at Fig. 5: in both cases, the observed optical effect from one given perspective is the same. Thus, the specific configuration of claimed pigments: nonplanar with at least two sides joining at an angle, plus their layer configuration, plus their in-plane magnetization in the same sense and direction ensures that, whatever their falling position (in the instance, V-shape or inverted V-shape), the observer will perceive an homogeneous optical effect when looking from the left and a different and homogeneous optical effect when looking from the right. It must be noted that falling positions other than those shown at Figs. 5 and 6 are not possible, because the pigments are magnetized and the main purpose of their magnetization is to arrange them spatially in a liquid medium, to limit their falling positions.

To obtain effect pigments with such optical properties as described, at least two of the plurality of layers (26, 27, 28, 30, 31, 32, shown at Fig. 9) constituting the pigment must have an asymmetrical configuration. "Asymmetrical configuration" is intended to refer to any configuration whereby the features of a first portion of a layer (26, 27, 28, 30, 31, 32) are different from the features of at least a second portion of the same layer (26, 27, 28, 30, 31, 32), said first and at least second portions corresponding to different segments (3, 4, 10, 24, 25) of the effect pigment. Different features are, without limitation, a different thickness or a different composition material.

The process of manufacturing the claimed pigments uses basic techniques known to the skilled in the art. Firstly, a flexible polymeric web is used as a substrate (19). Secondly, the substrate (19) is patterned. Thirdly, various layers (26, 27, 28, 30, 31, 32) of materials are successively laid on the patterned substrate (19), obtaining a multilayer film. Subsequently, the multilayer film is removed from the substrate (19) and is comminuted as pigments. These pigments are dispersed in a liquid medium to be used as a coating, in particular as a printing ink.

In general terms, platelet-shaped, either magnetic or not magnetic, with thin film multi-layer interference structure are conventional. They are described in a variety of documents, e.g. US 4,838,648; WO 2002/073250 A2; EP 686675 B1; WO 2003/000801 A2; US 6,838,166; WO 2007/131833 A1 and EP 2402401 B1. Preferably, the platelet-shaped magnetic thin film interference pigment particles comprise pigment particles having a five-layer Fabry-Perot multilayer structure and/or pigment particles having a six-layer Fabry-Perot multilayer structure and/or pigment particles having a seven-layer Fabry-Perot multilayer structure.

A pattern can be embossed on a substrate by different processes, for instance by pressing it with an embossing plate, by thermo-embossing, soft lithography, photolithography or others.

Regarding the successive deposition of materials, Physical Vapor Deposition (PVD) is the most commonly used technique, as described for instance in US 2003/0165637 A1.

To achieve an optical effect, the most common layer structure consists of an absorber layer, a dielectric one, a reflecting one, a dielectric one and a final absorber. This structure can also include a magnetic element, in the form of a magnetic layer, normally sandwiched between two layers of opaque reflecting materials, for instance as described in EP1366380A or US 7169472B2. In conventional effect pigments, all the layers, in particular the dielectric ones, which determine the optical effect produced by the pigment, have the same features (thickness, composition material) and optical properties, in particular, refractive index. The color shift of a Fabry-Perot structure effect pigment depends basically on the thickness and material of the semitransparent dielectric layer, since these parameters determine the difference in optical path between the light reflected in the first layer of the pigment and the light reflected in the reflective layer. Therefore, by playing with the thickness of the dielectric material deposited on different sides of the pigment, different optical effects can be obtained.

As explained, an asymmetrical deposition of material on different sides of the pigment is required to achieve different optical effects. The state of the art has described ways of obtaining "sculptured thin films" by the asymmetrical deposition of thin layers on a patterned carrier. However, these techniques have never been applied to the field of effect pigments. Most commonly, sculptured thin films are obtained by tilting the substrate or the target, so that the trajectory of the sputtered particles is oblique to the substrate. If the substrate is not flat but patterned, one of its sides will receive a greater quantity of sputtered particles, and consequently, the layer growth on that side will be thicker than on the opposite side. This result has been demonstrated, for example, by Muñoz-García et al., "Self-Organized Surface Nanopatterning by Ion Beam Sputtering" (DOI: 10.1007/978-0-387-77717-7_10).

### Brief description of drawings

FIG. 1: Conventional planar effect pigment.
FIG. 2: V-shaped, nonplanar effect pigment.
FIG. 3: V-shaped, nonplanar effect pigment in different falling position.
FIG. 4: Two V-shaped, nonplanar effect pigments.
FIG. 5: Two V-shaped, nonplanar effect pigments, magnetized and submitted to a magnetic field.
FIG. 6: Two V-shaped, nonplanar effect pigments, magnetized and submitted to a magnetic field, one of them in a different falling position with respect to its counterpart.

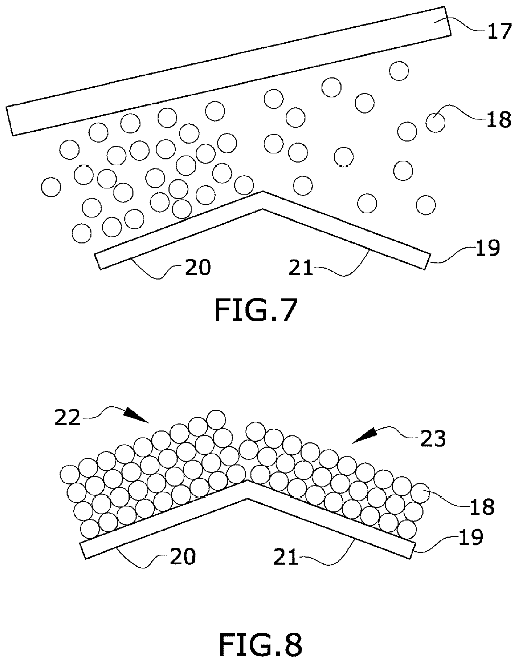

FIG. 7: Patterned substrate on which dielectric particles are being deposited asymmetrically by a target.
FIG. 8: Patterned substrate with an asymmetric dielectric layer.
FIG. 9: Plurality of layers of an effect pigment according to the invention.

### Description of embodiments

According to Fig. 7, in an embodiment of the invention a polymer substrate (19), preferably PET, is patterned with a V-shape all over its surface. The length of each side of the V is between 2 and 100 microns, preferably between 5 and 50 microns, and more preferably between 10 and 20 microns, depending on the employed printing system, as known by the skilled in the art. The inner angle of the V is approximately 130°, although it can range between 170° and 90°.

To obtain pigments of similar size, the substrate (19) is also embossed with grooves, such as disclosed in US2008/0107856A1. When comminuting the flakes, they will break along the grooves. In this embodiment, the grooves are placed preferably along the connecting line of the segments (20, 21) of the V. Additionally, breaking grooves can be placed perpendicularly to the connecting line of the sides of the V, so that the width of the pigments can be tailored. Preferably, the width of the pigment is shorter than its length, in order to obtain elongated pigments.

According to Fig. 9, a first layer of absorber material (26), preferably Chromium, is deposited on the polymer substrate (19). The thickness of this layer typically ranges between 3.5 and 10 nm.

A first layer of semitransparent dielectric material (27), preferably MgF2, is sputtered over the patterned substrate (19). FIG. 7 represents a target (17) sputtering dielectric material particles (18) on a patterned substrate (19). For ease of reference, only a fragmentary view of the substrate (19) is represented, corresponding to one of the V-shaped embossings. Once the plurality of layers have been deposited and the thin film comminuted, the layers (26, 27, 28, 30, 31, 32) of materials deposited on the represented fragment of the substrate (19) will constitute an individual effect pigment as represented in Fig. 9.

The V-patterned substrate has a first segment (20) and a second segment (21). The target (17) is tilted towards the left. Therefore, a higher amount of material is deposited on the first segment (20). FIG. 8 represents the same V-patterned substrate (19) once the dielectric material particles (18) have been deposited, forming a first dielectric layer (27). A first portion (22) of the first dielectric layer (27), corresponding to the first segment (20) of the effect pigment, is thicker than a second portion (23) corresponding to the second segment (21). Therefore, the first dielectric layer (27) thus formed has an asymmetrical configuration, i.e. the features (in this embodiment, the thickness) of a first portion (22) of the layer (27) are different from the features of a second portion (23) of the same layer (27).

An equivalent result can be obtained using two targets (17), each one facing one segment (20, 21) of the V-shaped substrate (19), both targets tuned in such a way that the amount of material deposited on each segment (20, 21) is different, in order to obtain a different thickness on each portion (22, 23) of the dielectric layers (27, 31). Another option is a single target (17) aiming only at one segment (20). Once the desired thickness on said segment (20) is obtained, the target (17) is tilted so that it aims at the other segment (21) depositing the desired amount of dielectric material.

Suitable values for the thickness of the dielectric layers are 440 nm for the first portion (22) of the dielectric layer (27) and 385 nm for the second portion (23). These values will produce two different optical effects in a document printed with an ink containing effect pigments according to this embodiment: a first optical effect consisting in a colour change from green to blue, perceived when, looking at it from one perspective, the document is tilted. And a second effect, consisting in a colour change from gold to green, perceived when the observer rotates the document along its perpendicular axis and tilts it.

Successively, a first layer of reflective material (28), preferably Aluminum is deposited on the first dielectric layer (27). The deposition of the reflective layer (28) is symmetrical. The thickness of this layer (28) would typically be 40 nm. Subsequently, a magnetic element (29), in the form of a layer is deposited on top of the reflective layer (28). This can suitably be a magnetic layer (29) of BaFe12O19 and a thickness of 300 nm as known in the state of the art. This is a high coercitivity magnetic material, which has been selected because when the pigments obtained are submitted to a magnetic field, their magnetization will not change. That the magnetization remains unaltered is key to this invention: if a low coercitivity material were selected, the magnetic field could invert the direction or the sense of the magnetization of the pigments. As explained, the pigments according to the invention must have a magnetization with the same direction and sense, and these properties must not be altered when the pigments are submitted to the magnetic field during the printing process.

Once the magnetic element (29) has been deposited, a second reflective layer (30) is laid on the magnetic element (29), preferably Aluminum again; the thickness of the second reflective layer (30) is typically 40 nm.

Subsequently, a second layer of semitransparent dielectric material (31), preferably MgF2 is laid. The thickness of the first (27) and second (31) dielectric layers must be inverted: the segment (20) having received the higher amount of material at the earlier stage, and having a thicker portion (22) of a dielectric layer (27) as a result, at this stage receives less material, so that the corresponding portion of the second dielectric layer (31) obtained is thinner and vice versa, as exemplified at Fig. 9. Once the two dielectric layers (27, 31) have been deposited in this way, at least two of the plurality of layers (26, 27, 28, 30, 31, 32) have an asymmetrical configuration as claimed.

Finally, a second layer of absorber material (32), preferably Chromium, is deposited on the polymer substrate (19) on top of the second dielectric layer (31). The thickness of this layer (32) typically ranges between 3.5 and 10 nm.

FIG. 9 represents an effect pigment according to one embodiment, with its plurality of layers. The effect pigment has a nonplanar configuration, with a first segment (24) and a second segment (25) that joint at an angle of approximately 130°. The pigment, therefore, presents four sides A, B, C and D. The effect pigment comprises a first absorber layer (26), a first dielectric layer (27), a first reflector layer (28), a magnetic element, specifically a magnetic layer (29), which has been magnetized with an in-plane magnetization, a second reflector layer (30), a second dielectric layer (31) and a second absorber layer (32).

The first dielectric layer (27) has a first portion (33), corresponding to side D and to first segment (24) of the effect pigment and a second portion (34) corresponding to side A and to second segment (25). The first portion (33) is thicker than the second portion (34). Therefore, this first dielectric layer (27) has an asymmetrical configuration, because the features of a first portion of a layer (33), in this instance its thickness, are different from the features of a second portion (34) of the same layer (27).

The second dielectric layer (31) has a first portion (35) corresponding to side C and to first segment (24) of the effect pigment, and a second portion (36) corresponding to side B and to second segment (25). The first portion (35) is thinner than the second portion (36), so the configuration of the second dielectric layer (31) is also asymmetrical. The two layers (27, 31) with asymmetrical configuration have the same function in the effect pigment. "Same function" is intended to mean that, without limitation, the at least two layers (26, 27, 28, 30, 31, 32) with asymmetrical configuration are absorber layers (26, 32), or dielectric layers (27, 31) or reflector layers (28, 30).

The first portion (33) of the first dielectric layer (27) has the same thickness than the second portion (36) of the second dielectric layer (31). Since the dielectric layers (27, 31) determine the optical properties of the effect pigment, a different thickness implies different optical properties. Accordingly, portions (33, 36) with same thickness have same optical properties, said portions (33, 36) corresponding respectively to different segments (24, 25) of the effect pigment and respectively to opposing sides D and B. On the other hand, portions (34, 35) with same thickness have same optical properties, said portions (34, 35) corresponding respectively to different segments (25, 24) and respectively to opposing sides A and C. Therefore, the optical properties of side A = side C and optical properties of side D = side B.

Once the layer structure (26, 27, 28, 30, 31, 32) is completed, the thin film obtained is magnetized. An in-plane magnetization, in the same direction and sense, is applied. It is convenient to apply the magnetization in a longitudinal sense with respect to the arms of the V. Magnetization of thin layers is a well-known process, in particular this technique has been developed for magnetic recording materials and is employed to store information in magnetic disks.

After magnetizing the film, this is removed from the polymer substrate (19) and comminuted, the flakes obtained in this way can be dispersed in a suitable vehicle to produce a coating, for instance a printable ink.

In another embodiment, the effect pigment has the same number of layers (26, 27, 28, 30, 31, 32) with a magnetic element (29) in the form of a magnetic layer and with the same layout as described in the precedent embodiment and represented in Fig. 9, except that its two dielectric layers (27, 31) have another configuration. Specifically, the two dielectric layers (27, 31) in this second embodiment comprise at least one luminescent or, in general, stimuli responsive material. Such a dielectric layer and the different materials it can be composed of, applied to a conventional, planar configuration effect pigment, are described in WO0160924A2 (SIPCA HOLDINGS S.A.), 23/08/2001, "Pigments having a viewing angle dependent shift of color, method of making, use and coating composition comprising said pigments and detecting device".

The pigment of the present embodiment is built according to the method which has been previously described and represented in Figs. 7, 8 and 9, except with respect to the two dielectric layers (27, 31) which are built as follows. Once the first absorber layer (26) has been laid, the target (17) is aimed at the first segment (20) of the patterned substrate (19). The target (17) sputters particles of a first dielectric material doped with a first luminescent or responsive material, any dielectric material as described in WO0160924A2 being suitable for the purpose. Subsequently, the target (17) is aimed at the second segment (21) of the patterned substrate (19), sputtering particles of a second dielectric material as described at same patent document. The chosen second dielectric material must be different from the first chosen dielectric material. After the successive first reflector layer (28), magnetic layer (29) and second reflector layer (30) have been deposited, a second dielectric layer (31) is laid by aiming the target (17) at the first segment (20) and sputtering particles of the second chosen dielectric material and subsequently aiming it at the second segment (21) and sputtering particles of the first chosen dielectric material.

With this configuration of the dielectric layers (27, 31), at least two of the plurality of layers have an asymmetrical configuration, because the features of a first portion of a dielectric layer (27) or (31) are different from the features of a second portion of the same layer (27) or (31), the difference consisting in that the two portions of a same layer (27) or (31) are made of a different dielectric material. In this second embodiment, the two dielectric layers (27, 31) have the same thickness.

A document printed with an ink containing effect pigments according to this second embodiment will produce two different optical effects: a first effect consisting in a luminescent effect (depending on the first dielectric material chosen), perceived by an observer when, looking at it from one perspective, the document is exposed to UV light or another stimuli. And a second effect, consisting of a different luminescent effect (depending on the second dielectric material chosen), perceived when the observer rotates the document along its perpendicular axis and exposes it to UV light or another stimuli.

## Claims

1. Effect pigment comprising a plurality of layers (26, 27, 28, 30, 31, 32) and a magnetic element (29), **characterized in that** its configuration is nonplanar.

2. Effect pigment according to claim 1, **characterized in that** it comprises at least two segments (3, 4, 9, 10, 24, 25) which join at an angle.

3. Effect pigment according to claim 2, **characterized in that** it comprises two segments (3, 4, 9, 10, 24, 25) that join at an angle configuring a V-shaped effect pigment, the inner angle of which measuring substantially between 170° and 90°.

4. Effect pigment according to claim 2, **characterized in that** the optical properties of one side (A, B, C, D) of the pigment are the same as the optical properties of an opposing side of the pigment (A, B, C, D).

5. Effect pigment according to claim 1, **characterized in that** at least two of the plurality of layers (26, 27, 28, 30, 31, 32) have an asymmetrical configuration.

6. Effect pigment according to claim 5, **characterized in that** the thickness or the composition material of a first portion of one of the at least two layers (26, 27, 28, 30, 31, 32) having an asymmetrical configuration is different to the thickness or the composition material of at least a second portion of that same layer (26, 27, 28, 30, 31, 32), said first and at least a second portions corresponding to different segments (3, 4, 9, 10, 24, 25) of the effect pigment.

7. Effect pigment according to claim 5, **characterized in that** the at least two layers (26, 27, 28, 30, 31, 32) with asymmetrical configuration have the same function in the effect pigment.

8. Effect pigment according to claim 5, **characterized in that** a first portion of one of the at least two layers (26, 27, 28, 30, 31, 32) with asymmetrical configuration has identical optical properties to at least a second portion of another of the at least two layers (26, 27, 28, 30, 31, 32) with asymmetrical configuration, said portions corresponding to different segments (3, 4, 9, 10, 24, 25) of the effect pigment.

9. A plurality of effect pigments according to claim 1, **characterized in that** their respective magnetic elements (29) are magnetized with an in-plane magnetization and in the same direction and sense.

10. A method of producing effect pigments according to one of claims 1 to 9 comprising the steps of embossing a flexible substrate (19) with a nonplanar pattern, depositing successive layers (26, 27, 28, 30, 31, 32) of material and a magnetic element (29), magnetizing the thin film thus formed and comminuting the film, whereby the deposition of at least two layers (26, 27, 28, 30, 31, 32) of material is performed by tilting a target (17) of a deposition device.

11. The method of claim 10, whereby the thin film is magnetized by applying the magnetization in the same direction and sense.

12. The method of claim 10, whereby the embossing pattern is V-shaped and the thin film is magnetized in a longitudinal sense with respect to the arms of the V-shaped patterns.

13. Use of pigments according to one of claims 1 to 9 for security applications.

14. Coating composition, in particular printing ink, comprising pigments according to one of claims 1 to 9.

15. Article, in particular security document, comprising a layer of the coating composition, in particular of the printing ink according to claim 14.
